# EUROPEAN PATENT APPLICATION

(11) **EP 2 633 764 A1**
(43) Date of publication of application: **04.09.2013**
(21) Application number: 12180551.9
(22) Date of filing: 15.08.2012
(51) Int. Cl.: A23L 1/30, C12G 3/00, C12G 3/06

(54) **Vodka production method**

(30) Priority: 29.02.2012 UA 2012002433
(71) Applicant: National Alcohol Company, LLC, 19632 Cherkasy area (UA)
(72) Inventor: Nechytailo, Sviatoslav, 01001 Kyiv (UA)
(74) Representative: Anohins, Vladimirs

(57) **Abstract**

The invention relates to the alcoholic beverage industry, in particular, to a process of improving organoleptic properties of vodka by means of taste softening by a sprouted grain extract. The vodka production method comprises the steps of: preparing a water-alcohol mixture by mixing a rectified alcohol with a specially treated water, cooling the mixture, its purifying by passing it through quartz sand, activated carbon, and quartz sand, introducing the additional ingredients, final filtration, and bottling, and also the suggested method comprises the step of softening the vodka by a sprouted grain extract for the improvement of the organoleptic properties of vodka.

## Description

The invention relates to the alcoholic beverage industry, in particular, to the technological processes of improving organoleptic properties of beverages, namely, of vodka, by means of adding a sprouted grain extract.

The known *Khlebosolnaya* vodka, Russian Federation patent 2138545, cl. C12G3/06, 1998, is produced of *Extra* rectified ethyl alcohol with the use of 65.8% sugar syrup and an aromatic alcohol of *Vyru* rye flour bread made of white rye flour, grade 1 wheat flour, non-fermented rye malt, pressed yeast, salt, molasses, cumin and whey.

A disadvantage of this vodka is that it has a low physiological value.

In terms of technical essence the closest product is *Stalkovskaya* vodka, Russian Federation patent 2193052, cl. C12G3/06, application No. 2000124833/13 of 29.09.2000, publication of 20.11.2002, accepted as the closest prior art.

In production of vodka accepted as the closest prior art, the aromatic alcohol is a distillery vinasse alcohol, the main source components of which comprise untreated rye and wheat grains. It is a common knowledge that natural grains contain much vitamins and minerals and are used as medicinal materials in the treatment of diseases of the digestive system, anemia, diabetes and other diseases. After the treatment and further processing of the grains, their valuable therapeutical properties are lost, especially when baked. In order to improve the organoleptic properties of vodka and to saturate it with biologically active substances additional components are introduced into the composition such as natural honey of clear grades, which surpasses other kinds of honey in terms of its therapeutical properties and has a mild soft aroma, which also improves the taste and aroma of vodka, i.e. it is involved in the formation of organoleptic properties of vodka. A perfect wedding of an aromatic distillery vinasse alcohol and natural honey enabled to create a vodka that has high physico-chemical and organoleptic properties: this vodka has an original flavor of an oven-baked rural bread.

The object of the present invention is to increase the physiological value of vodka, to improve its organoleptic properties by softening of the vodka using a sprouted grain extract and to expand the range of vodkas.

In production of vodka a low-temperature treated and purified through a carbon filtering assembly water-alcohol mixture is fed to a finishing tank for making vodka.

A vodka blend is prepared as follows: according to specific recipe directions, glucose, sugar, honey or other ingredients permitted for use in the alcoholic beverage industry are added to the vodka. The blend is stirred for at least 45 minutes. Afterwards, a first-run sprouted grain extract is added to the vodka and the blend is thoroughly stirred again. Thorough stirring is necessary for the uniformly spreading the extract throughout the vodka volume. Afterwards the blend is left to rest for 24 hours. During the resting, the vodka becomes noticeably softened under the action of the sprouted grain extract, whereas the taste and aroma of the vodka become much more harmonious, soft and pleasant. Upon the expire of said period, the vodka undergoes a final filtration and subsequent bottling.

To prepare the sprouted grain extract, cereal grains are used. The sprouted grain extract is prepared as follows: the grains are carefully sorted out for selecting sound and undamaged grains, which are then several times washed with a specially treated cold flowing water. The grains that become floating during the washing are rejected. The selected and washed grains are put in a vessel, rinsed with a pure specially treated water and left for sprouting. Periodically, the grains are gently stirred, washed with a specially treated water and rinsed with a pure specially treated water again. The grains become sprouted in 2.5-3 days. After the grains have sprouted, they are carefully washed, and afterwards a 50% (v/v) water-alcohol solution is poured onto them. The grains flooded with said solution are left to rest for 3 days, during which period they are periodically stirred. On the 4^{th} day, the alcohol extract is separated from the grains. The resulting first-run extract has a light straw color, odor of sprouted grains, slightly sweet flavor and an alcohol concentration of 49% (v/v). The extract undergoes filtration and is added to the vodka blend. The volume of the extract added to the blend may vary from 5 to 15 dm³ for 1000 daL of vodka. Such a volume of the extract significantly softens the taste of vodka, the transparency indicator - vodka optical density index being less than 0.005, which complies with the requirements of DSTU 41665 "Vodkas and special vodkas. Specifications".

The technical result, according to the invention, is achieved by that the vodka production method comprising the steps of: preparing a water-alcohol mixture by mixing a rectified alcohol with a specially treated water, purifying the mixture, introducing additional ingredients, final filtering, and bottling, for the improvement of the organoleptic and physico-chemical properties of vodka, is supplemented with the step of softening the vodka by a sprouted grain extract, and the step of cooling the water-alcohol mixture being performed before the purification thereof by passing it through a carbon filtering assembly.

The sprouted grains are surpassingly valuable because their sprouts are the only life-giving nourishment. Including them in a diet provides for a unique opportunity for a person to eat a whole living organism possessing all the natural biological properties and being in the phase of maximum vitality. This period lasts only for a few days and it is during this time that they should be used by people in order to gain maximum of such an unusual product. Sprouts have long been used as the oldest health care products. This healing food is amazingly able to save us from many diseases and prevent their recurrence at the same time.The sprouted grains contain an enormous energy potential. By adding them to our meals, we receive a powerful surge of liveliness. The enzymes contained in sprouts split the proteins, fats and carbohydrates stored in the seeds, making it easier for us to congest them, and keep remaining active in the human body, saving its inner strength. Thus, adding a sprouted grain extract to vodka leads to the increase of the physiological value of the product.

As to the step of cooling the water-alcohol mixture, it is performed at a plate heat exchanger. During this time, the assimilation between the alcohol and water occurs. The resulting water-alcohol mixture is fed to a carbon filtering assembly for purification. Afterwards, the water-alcohol mixture is fed to a finishing tank for preparing a vodka blend. The vodka blend is prepared as follows: according to the specific recipe directions, glucose, sugar, honey or other ingredients permitted for use in the alcoholic beverage industry are added to vodka. The blend is thoroughly stirred by a mechanical stirrer for at least 45 minutes. Afterwards, a first-run sprouted grain extract is added to the vodka and the blend is thoroughly stirred again. Thorough stirring is necessary for uniformly spreading the extract throughout the vodka volume. Afterwards, the blend is left to rest for 24 hours. During the resting, the vodka becomes noticeably softened under the action of the sprouted grain extract, whereas the taste and aroma of vodka become much more harmonious, soft and pleasant. Upon the expiry of said period, the vodka undergoes a final filtration and subsequent bottling.

To prepare the sprouted grain extract, cereal grains are used. The sprouted grain extract is prepared as follows: the grains are carefully sorted out for selecting sound and undamaged grains, which are then several times washed with a specially treated cold flowing water. The grains that become floating during the washing are rejected. The selected and washed grains are put in an enameled vessel, poured on (rinsed) with a pure specially treated water and left for sprouting. Periodically, the grains are gently stirred, washed with a specially treated water and poured on (rinsed) with a pure specially treated water again. The grains become sprouted in 2.5-3 days. After the grains have sprouted, they are carefully washed, and afterwards a 50% (v/v) water-alcohol solution is poured onto them. The grains flooded with said solution are left to rest for 3 days, during which period they are stirred each 3 hours. On the 4^{th} day, the alcohol extract is separated from the grains. The resulting first-run extract has a light straw color, odor of sprouted grains, slightly sweet flavor, and an alcohol concentration of 49% (v/v). The extract undergoes filtration and is added to the vodka blend. The volume of the extract added to the blend may vary from 5 to 15 dm³ for 1000 daL of vodka. Such a volume of the extract significantly softens the taste of vodka, the transparency indicator - vodka optical density index being less than 0.005, which complies with the requirements of DSTU 41665 "Vodkas and special vodkas. Specifications".

**Example 1.** Water-alcohol mixture is prepared by mixing a specially treated water and rectified alcohol in a proportion that privides obtaining a water-alcohol solution of desired strength. The water-alcohol mixture is fed to a plate heat exchanger. Under the effect of cold water the water-alcohol mixture is cooled and fed for a 12 hours' resting. During this time, the assimilation between the alcohol and water occurs and a slight temperature rise by no more than 1°C is observed. The water-alcohol mixture, which is fed to a coal column for filtration <Sic!>. Afterwards, the resulting water-alcohol mixture is fed for purification and to a finishing tank. A vodka blend is prepared as follows: according to specific recipe directions, glucose, sugar, honey or other ingredients permitted for use in the alcoholic beverage industry are added to vodka. The blend is thoroughly stirred by a mechanical stirrer for at least 45 minutes. Afterwards, a first-run sprouted grain extract is added to vodka and the blend is thoroughly stirred again. Thorough stirring is necessary for uniformly spreading the extract throughout the vodka volume. Afterwards, the blend is left to rest for 24 hours. During the resting, the vodka becomes noticeably softened under the action of the sprouted grain extract, whereas the taste and aroma of the vodka become much more harmonious, soft and pleasant. Upon the expiry of said period, the vodka undergoes a final filtration and subsequent bottling

To prepare the sprouted grain extract, cereal grains are used. The sprouted grain extract is prepared as follows: the grains are carefully sorted out for selecting sound and undamaged grains, which are then several times washed with a specially treated cold flowing water. The grains that become floating during the washing are rejected. The selected and washed grains are put in an enameled vessel, poured on (rinsed) with a pure specially treated water and left for sprouting. The temperature in the premises where the grains are supposed to sprout should be about 19°C. Periodically, the grains are gently stirred, washed with a specially treated water and poured on (rinsed) with a pure specially treated water again. The grains become sprouted in 2.5-3 days. After the grains have sprouted, they are carefully washed, and afterwards a 50% (v/v) water-alcohol solution is poured onto them. The grains flooded with said solution are left to rest for 3 days, during which period they are periodically stirred. On the 4^{th} day, the alcohol extract is separated from the grains. The resulting first-run extract has a light straw color, odor of sprouted grains, slightly sweet flavor and an alcohol concentration of 49% (v/v). The extract undergoes filtration and is added to the vodka blend. The volume of the extract added to the blend is 5 dm³ for 1000 daL of vodka. Such a volume of the extract significantly softens the taste of vodka, the transparency indicator - vodka optical density index being less than 0.005, which complies with the requirements of DSTU 41665 "Vodkas and special vodkas. Specifications".

**Example 2.** Water-alcohol mixture is prepared by mixing a specially treated water and rectified alcohol in a proportion that provides obtaining a water-alcohol solution of desired strength. The water-alcohol mixture is fed to a plate heat exchanger. Under the effect of cold water the water-alcohol mixture is cooled and fed for a 12 hours' resting. During this time, the assimilation between the alcohol and water occurs and a slight temperature rise by no more than 1°C is observed. The water-alcohol mixture, which is fed to a coal column for filtration <Sic!>. Afterwards, the resulting water-alcohol mixture is fed for purification and to a finishing tank. A vodka blend is prepared as follows: according to the specific recipe directions, glucose, sugar, honey or other ingredients permitted for use in the alcoholic beverage industry are added to vodka. The blend is thoroughly stirred by a mechanical stirrer for at least 45 minutes. Afterwards, a first-run sprouted grain extract is added to vodka and the blend is thoroughly stirred again. Thorough stirring is necessary for the uniformly spreading the extract throughout the vodka volume. Afterwards, the blend is left to rest for 24 hours. During the resting the vodka becomes noticeably softened under the action of the sprouted grain extract, whereas the taste and aroma of vodka become much more harmonious, soft and pleasant. Upon the expiry of said period, the vodka undergoes a final filtration and subsequent bottling.

To prepare the sprouted grain extract cereal grains are used. The sprouted grain extract is prepared as follows: the grains are carefully sorted out for selecting sound and undamaged grains, which are then several times washed with a specially treated cold flowing water. The grains that become floating during the washing are rejected. The selected and washed grains are put in an enameled vessel, poured on (rinsed) with a pure specially treated water and left for sprouting. The temperature in the premises where the grains are supposed to sprout should be about 20°C. Periodically the grains are gently stirred, washed with a specially treated water and poured on (rinsed) with a pure specially treated water again. The grains become sprouted in 2.5 days. After the grains have sprouted, they are carefully washed, and afterwards a 50% (v/v) water-alcohol solution is poured onto them. The grains flooded with said solution are left to rest for 3 days, during which period they are periodically stirred. On the 4^{th} day, the alcohol extract is separated from the grains. The resulting first-run extract has a light straw color, odor of sprouted grains, slightly sweet flavor and an alcohol concentration of 49% (v/v). The extract undergoes filtration and is added to the vodka blend. The volume of the extract added to the blend is 10 dm³ for 1000 daL of vodka. Such a volume of the extract significantly softens the taste of vodka, the transparency indicator - vodka optical density index being less than 0.005, which complies with the requirements of DSTU 41665 "Vodkas and special vodkas. Specifications".

**Example 3.** Water-alcohol mixture is prepared by mixing a specially treated water and rectified alcohol in a proportion that provides obtaining a water-alcohol solution of desired strength. The water-alcohol mixture is fed to a plate heat exchanger. Under the effect of cold water the water-alcohol mixture is cooled and fed for a 12 hours' resting. During this time, the assimilation between the alcohol and water occurs and a slight temperature rise by no more than 1°C is observed. The water-alcohol mixture, which is fed to the coal column for filtration <Sic!>. Afterwards, the resulting water-alcohol mixture is fed for purification and to a finishing tank. A vodka blend is prepared as follows: according to the specific recipe directions, glucose, sugar, honey or other ingredients permitted for use in the alcoholic beverage industry are added to vodka. The blend is thoroughly stirred by a mechanical stirrer for at least 45 minutes. Afterwards, a first-run sprouted grain extract is added to vodka and the blend is thoroughly stirred again. Thorough stirring is necessary for uniformly spreading the extract throughout the vodka volume. Afterwards, the blend is left to rest for 24 hours. During the resting vodka becomes noticeably softened under the action of the sprouted grain extract, whereas the taste and aroma of vodka become much more harmonious, soft and pleasant. Upon the expiry of said period, vodka undergoes a final filtration and subsequent bottling.

To prepare the sprouted grain extract, cereal grains are used. The sprouted grain extract is prepared as follows: the grains are carefully sorted out for selecting sound and undamaged grains, which are then several times washed with a specially treated cold flowing water. The grains that become floating during the washing are rejected. The selected and washed grains are put in an enameled vessel, poured on (rinsed) with a pure specially treated water and left for sprouting. The temperature in the premises where the grains are supposed to sprout should be about 23°C. Periodically, the grains are gently stirred, washed with specially treated water and poured on (rinsed) with a pure specially treated water again. The grains become sprouted in 3 days. After the grains have sprouted, they are carefully washed, and afterwards a 50% (v/v) water-alcohol solution is poured onto them. The grains flooded with said solution are left to rest for 3 days, during which period they are periodically stirred. On the 4^{th} day, the alcohol extract is separated from the grains. The resulting first-run extract has a light straw color, odor of sprouted grains, slightly sweet flavor and an alcohol concentration 49% (v/v). The extract undergoes filtration and is added to the vodka blend. The volume of the extract added to the blend is 15 dm³ for 1000 daL of vodka. Such a volume of the extract significantly softens the taste of vodka, the transparency indicator - vodka optical density index being less than 0.005, which complies with the requirements of DSTU 41665 "Vodkas and special vodkas. Specifications".

The transparency, taste, stability of the vodka obtained in this Example as well as other organoleptic properties thereof are the best of all the three cases.

Thus, a surpassing value of sprouted grains arises from the fact that the sprouts contain enormous energy potential, the enzymes contained in sprouts split proteins, fats and carbohydrates stored in the seeds, making it easier for us to congest them, and keep remaining active in the human body, saving its inner strength.

Thus, benefits of vodka softening by a sprouted grain extract are the following:
1) the organoleptic properties of vodka are improved;
2) physico-chemical properties of vodka remain unmodified;
3) physiological value of the product is increased.

## Claims

1. A vodka production method comprising the steps of:
preparing alcohol-water mixture by mixing a rectified alcohol with a specially treated water;
cooling the mixture;
purifying the mixture by passing it through quartz sand, activated carbon, and quartz sand;
introducing the additional ingredients;
final filtering, and
bottling,
**characterized in that** the method further comprises the step of
softening the taste of the vodka by a sprouted grain extract.

2. The vodka production method according to claim 1, wherein said sprouted grain extract is prepared using cereal grains.

3. The vodka production method according to any of claims 1 or 2, wherein glucose, sugar, honey or other ingredients permitted for use in the alcoholic beverage industry are added to the vodka prior to adding the sprouted grain extract.

4. The vodka production method according to any of claims 1-3, wherein a first-run sprouted grain extract is added to the vodka.

5. The vodka production method according to any of claims 1-4, wherein the vodka undergoes stirring.

6. The vodka production method according to any of claims 1-5, wherein after stirring the vodka is left to rest for 24 hours.

7. The vodka production method according to any of claims 1-6, wherein the sprouted grain extract is added to the vodka in an amount of 5 to 15 dm³ for 1000 daL of vodka.

8. The vodka production method according to any of claims 1-7, wherein the resting of sprouted grains lasts for 3 days with periodically stirring.

9. The vodka production method according to any of claims 1-8, wherein during the resting of sprouted grains they are gently stirred, washed with a specially treated water and poured on (rinsed) with a pure specially treated water again.

10. The vodka production method according to any of claims 1-9, wherein the grains are left for sprouting for 2.5-3 days.

11. The vodka production method according to any of claims 1-10, wherein the temperature in the premises where the grains are sprouted is kept between 19°C and 23°C.
